# EUROPEAN PATENT APPLICATION

(11) **EP 1 381 049 A2**
(43) Date of publication of application: **14.01.2004**
(21) Application number: 03014165.9
(22) Date of filing: 24.06.2003
(51) Int. Cl.: G11B 23/107

(54) **Expandable tape cartridge**

(30) Priority: 12.07.2002 US 195572
(71) Applicant: Tandberg Data ASA, 0884 Oslo (NO)
(72) Inventor: Rudi, Guttorm, N-1472 Fjellhamar (NO); Rubas, Ladislav, N-3408 Tranby (NO)
(74) Representative: Tönhardt, Marion, Dr.

(57) **Abstract**

An expandable tape cartridge has a housing with a top and a bottom that are movable relative to each other between a minimum spacing and a maximum spacing. A tape reel with magnetic recording tape wound thereon is rotatably mounted in the housing for rotation around an axis proceeding substantially perpendicularly between the top and the bottom of the housing. The tape reel has insufficient clearance for free rotation within the housing when the spacing between the top and the bottom is at the minimum, and is freely rotatable when the spacing is at the maximum. This allows the width of the recording tape measured in a direction parallel to the rotational axis, to be increased, thereby increasing the storage area available on the recording tape without increasing the linear length of the recording tape.

## Description

### BACKGROUND OF THE INVENTION

### Field of the Invention

The present invention is directed to a cartridge of the type suitable for containing one or more wound reels of magnetic recording tape.

### Description of the Prior Art

Due to the standardized design of tape drives, tape cartridges which are respectively used with the various types of tape drives have standardized form factors, which means that the cartridges have standardized exterior dimensions so as to be able to fit within the drive for which it is intended. As an example, a commonly used single reel cartridge has exterior dimensions of approximately 4"×4"×1" and contains a tape pack having a tape of ½".

Since the exterior dimensions of the cartridge are fixed, efforts are continually being made to increase the interior volume that is available for containing the magnetic recording tape, since an ability to contain more magnetic tape within the cartridge means that more data can be stored.

Some of these efforts have been directed to allowing a longer length of magnetic tape to be wound on one or more reels within the cartridge. Although increasing the linear length of the tape which can be contained in a cartridge having a given form factor will enlarge the total amount of surface area of the tape that is available for recording data, and thus will allow more data to be recorded on the tape, increasing the length of the tape also increases the access time to the data since the read/write head must be move linearly along the tape length in order to access the recorded data. If the tape has a longer length, this unavoidably results in a longer access time since a longer length of tape must be wound or unwound in order to bring the desired data adjacent to the read/write head.

Expandable housings for tape cartridges have recently been developed to address the related problem of providing enough room within the interior of a tape cartridge to allow all, or substantially all, of the magnetic recording tape in a dual reel configuration to be wound on only one of the reels. When all of the tape is wound on only one of the reels, the resulting tape pack has an extremely large diameter. Copending United States Application Serial No. 10/052,839, filed November 7, 2001 ("Wide Tape Holding Frame," Rudi et al.) and co-pending United States Application Serial No 09.859,328, filed May 16, 2001 ("Tape Cartridge With Expandable Cover," Rudi et al.) have been developed to allow all or substantially all of a tape pack of wide tape to be contained on a single reel in a dual reel arrangement.

### SUMMARY OF THE INVENTION

It is an object of the present invention to provide a cartridge for magnetic recording tape having a standard form factor which allows an increased amount (surface area) of recording tape to be contained in the cartridge, thereby increasing the data storage capacity of the tape contained within the cartridge without deviating from the standardized form factor.

It is a further object of the present invention to provide such a tape cartridge which allows more magnetic recording tape to be contained therein without increasing the linear length of the recording tape.

It is further object of the present invention to provide such a tape cartridge wherein the ability to contain more tape within the cartridge does not result in a decrease in the structural strength or integrity of the overall tape cartridge.

The above object is achieved in accordance with the principles of the present invention in an expandable tape cartridge having a housing with a relatively movable top and bottom having a spacing therebetween, wherein the spacing can be varied between a minimum spacing and a maximum spacing dependent on the relative movement between the top and bottom of the housing. A tape reel with magnetic recording tape wound thereon is rotatably mounted in the housing, so as to rotate around an axis that proceeds substantially perpendicularly between the top and bottom of the housing. The tape reel has a height parallel to the aforementioned axis. When the spacing between the top and bottom of the housing is at the minimum, the tape reel has insufficient clearance to freely rotate within the housing, but when the cartridge is expanded to the maximum spacing, the reel is able to freely rotate.

As used herein, "freely rotate" means rotation in the manner necessary to wind or unwind the tape in a tape drive.

The invention is in part based on the recognition that it is only necessary that the cartridge housing have interior dimensions permitting free rotation of the tape or reels therein when the cartridge is actually inserted in a tape drive. When the cartridge is removed from the tape drive, it is of no consequence if the interior dimensions are so small that free rotation is impeded by insufficient clearance between the tape reel and one or more of the interior walls of the cartridge.

The top and bottom of the cartridge, therefore, are relatively movable (i.e., at a minimum, one moves relative to the other). By suitable loading, such as spring loading, the top and bottom are caused to be compressed when the cartridge is not in a tape drive, so that the aforementioned minimum spacing between the top and bottom results. When the cartridge is inserted into a tape drive, the loading mechanisms, such as the spring mechanisms are operated by suitable components within the drive so as to force the top and bottom apart, to the aforementioned maximum spacing, thereby allowing free rotation of the tape reel within the housing.

This cartridge structure allows the width of the magnetic recording tape to be increased, the width being measured parallel to the rotational axis of the reel, and this contributing to the overall height of the reel. The total height is determined by the width of the tape and the thickness of the top and bottom flanges of the reel. The width of the tape can be additionally increased by providing a recess in one or both of the top and bottom of the cartridge housing, so that when the top and bottom are at the minimum spacing, one or both of the flanges are received into this recess. The height of the reel therefore is increased, and thus the spacing between the flanges is increased, thereby allowing for wider tape to be used. This recess causes a portion of the top or the bottom of the housing to become relatively thin in thickness and thus, by itself, this thinned region of the top or the bottom would not exhibit particularly high strength, and may be subject to damage when exposed to a force acting on the top or the bottom of the housing from the exterior of the housing. Protection against such forces, however, is necessary only when the cartridge is not located within the drive, i.e., when it is being handled or stored outside of the drive. When the inventive cartridge is outside of the drive, as noted above, the top and bottom exhibit the minimum spacing from each other, and therefore the thinned region of the top or the bottom is virtually directly adjacent one of the flanges of the tape reel. This flange of the tape reel, fitting into the recess, provides sufficient mechanical support and strength so that the overall structural integrity, in terms of its ability to protect the tape from exterior forces, is not significantly compromised.

In the context of the above example of a single reel cartridge having a form factor of approximately 4"×4"×1", the width of the magnetic recording tape can be increased from ½" to ¾". This means that the total tape surface area is increased by 50%, thereby also increasing the storage capacity by 50%, but without any necessity of adding to the linear length of the tape. Other common form factors are 102.00 mm × 105.40 mm × 21.50 mm, 105.79 mm × 105.41 mm × 25.40 mm and 125.00 mm × 109.00 mm × 24.50 mm. The width of the magnetic recording tape can be increased by a comparable amount in cartridges having these form factors as well. Measured in millimeters, this means the tape will have a width of approximately 19 mm in cartridges having these form factors.

### DESCRIPTION OF THE DRAWINGS

Figure 1 A is a perspective view of an expandable tape cartridge in accordance with the invention, in the embodiment of a single reel cartridge.
Figure 1B is a bottom view of the cartridge shown in Figure 1A.
Figure 1 C is a sectional view taken along line B-B of Figure 1B.
Figure 1D is a side view of the cartridge in the expanded state shown in Figures 1A and 1B.
Figure 2A is a sectional view of the inventive cartridge, taken along line D-D of Figure 2D.
Figure 2B is a plan view of the inventive expandable cartridge.
Figure 2C is a sectional view taken along line C-C of Figure 2B showing the inventive cartridge in a non-expanded state.
Figure 2D is a side view of the inventive cartridge in the non-expanded state.
Figure 3 is an exploded view of the inventive expandable cartridge.
Figure 4A is a side view of a lock spring assembly used in the inventive expandable cartridge.
Figure 4B is a sectional view taken along line A-A of Figure 4A.
Figure 4C is a perspective view of the lock spring assembly of Figure 4A.
Figure 4D is a schematic representation of the lock spring assembly shown in Figure 4A, indicating spacing which exist when the cartridge is in the expanded condition.

### DESCRIPTION OF THE PREFERRED EMBODIMENTS

The inventive expandable cartridge is explained below on the basis of a single reel embodiment, however, it will be apparent to those of ordinary skill in the art that the inventive principles can be employed in a dual reel cartridge as well.

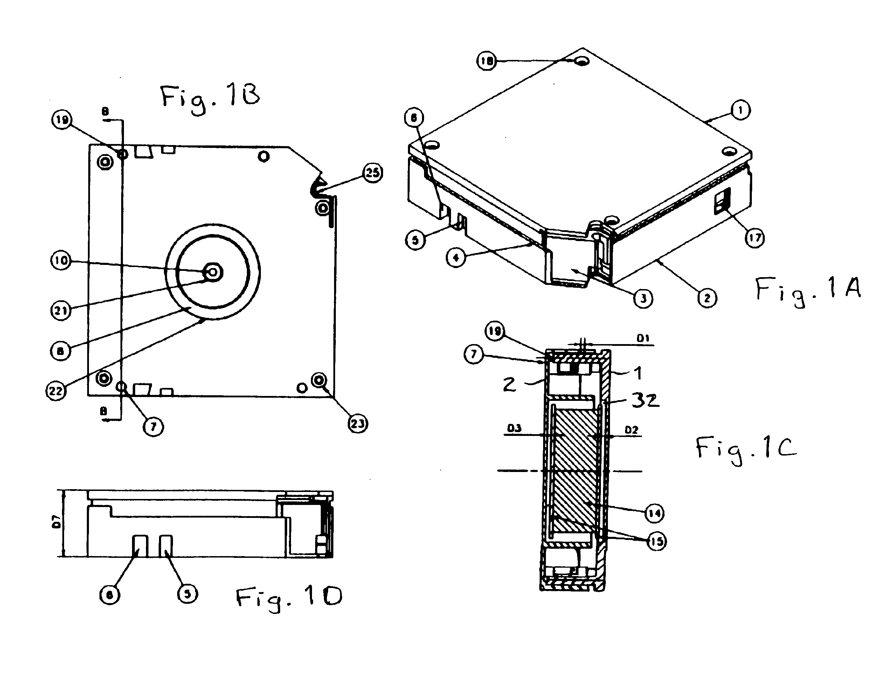

Figures 1A through 1D illustrate the inventive cartridge in the expanded state. The cartridge has a top cover 1 and a bottom cover 2, which also has sidewalls integrated therewith. Magnetic tape is wound on a tape reel contained within the cartridge (neither the tape nor the reel being visible in Figures 1A through 1D). The free end of the magnetic tape has a leader block 3 allowing the tape to be pulled out of the cartridge housing in a known manner. The exterior of the cartridge has a notch 5 for loading the cartridge into a drive and a notch 6 for robotic handling of the cartridge. These notches are located at standardized positions so that a standardized load/unload mechanism (except for differences noted herein) can be used in the drive and standard robotic equipment can be used for handling the cartridge.

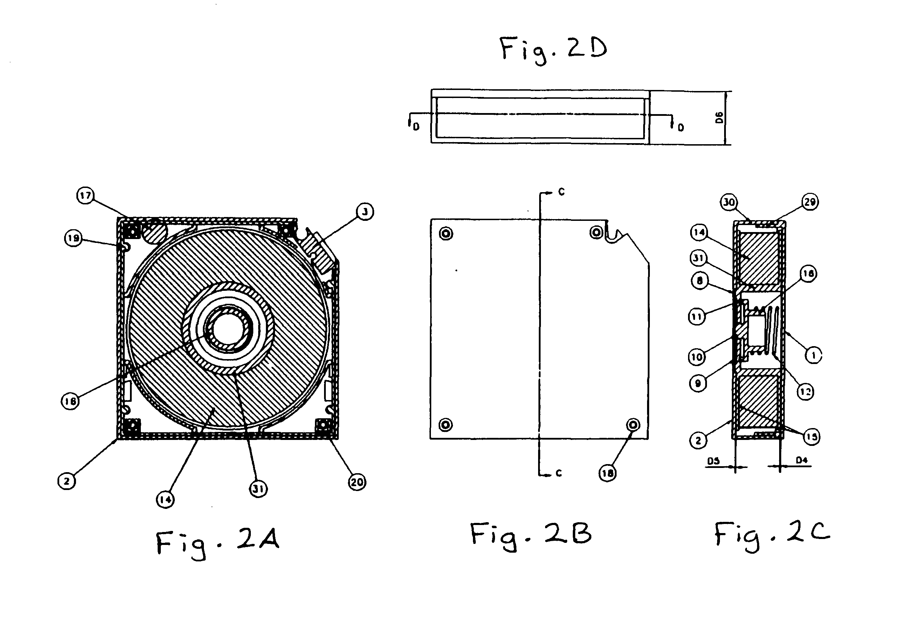

The cartridge has four access holes 7 which allow access to four lift posts 19. The hub of the tape reel has a toothed rim 8 which is accessible through an opening in the bottom cover 2, as can be seen in Figure 1 B. Also visible in Figure 1B is a protrusion of the hub lock part 16 (shown in more detail in Figures 2A and 2C).

In the sectional view shown in Figure 1C, the overall tape pack 14 is shown wound between two flanges 15 of the reel.

The cartridge also includes a write inhibit switch 17 which is actuated in a known manner to preclude inadvertent overwriting of data on previously-recorded data on the tape.

The top cover 1 has four mounting holes 18 for mounting lock spring assemblies, which are described in more detail below. The tape reel 33 has a window 21 for the protrusion 10 of the hub lock part 16, the bottom cover 2 has a window 22 for the toothed rim 8. The bottom cover 2 has four mounting holes 23 for the aforementioned lock spring assemblies. The write inhibit switch 17 is accessible via a window 24 in one of the sidewalls of the bottom cover 2.

The gripping notch 25 of the leader block 3 also can be shown in Figure 1 B.

The distance designated D1 indicates the overlap between the top cover 1 and the bottom cover 2 in the expanded state. The distances D2 and D3 are the clearance dimensions between the reel flanges 15 and the top cover 1 and the bottom cover 2 in the read/write mode. The dimension D7 is the height of the cartridge in the expanded state.

As can be seen in Figure 1C, the top cover 1 has a recess 32 therein disposed in registration with the adjacent flange 15 of the tape reel. When the cartridge is in the non-expanded state, this flange 15 is received within the recess 32, so that the thinned portion of the top cover 21 which creates the recess 32 is in extremely close proximity to, if not actually touching, the flange 15. The flange 15 therefore, in the non-expanded state, serves to reinforce the thinned portion of the top cover 1. The flange fitted into the recess 32 of the top cover 1 creates an overall effective thickness for the top cover 1 which is sufficient to provide the necessary protection against damage due to exterior forces acting on the cartridge during handling outside of the drive.

As noted above, Figures 2A through 2D show the cartridge in the closed or non-expanded condition.

In Figure 2C it can be seen that the reel has a magnetic plate 9 for magnetic coupling to the toothed rim of a motor shaft of the drive motor of a drive in which the cartridge will be inserted. A toothed rim 11 is forced by a coil spring 12 into engagement with a mating toothed rim on the hub reel, thereby preventing rotation of the reel when the cartridge is out of the drive. The aforementioned hub lock part 16 can also be seen in Figure 2C having a guide portion for the hub lock spring 12. The cover lock sub-assembly can be seen in Figure 2A.

As can also be seen in Figure 2C, the top cover 1 and the bottom cover 2 have overlapping sidewalls 30 and 29, which slide relative to each other as the spacing between the top cover 1 and the bottom cover 2 varies. The hub core 31 is also shown in Figure 2C as well as Figure 2A.

The distance D4 is the clearance distance between the inside of the top cover 1 and the outside of the hub reel flange 15. The distance D5 is the distance between the inside of the bottom cover 2 and the outside of the flange 15. The hub lock spring 12 forces the hub reel 15 into contact with a portion of the inside of the bottom cover close to the window 22 shown in Figure 1B. The distance D5, which is approximately 0.1 - 0.2 mm, is necessary in order to avoid deformation of the flanges 15 when forces are applied against the cartridge housing. The distance D6 is the height dimension of the cartridge in the closed state.

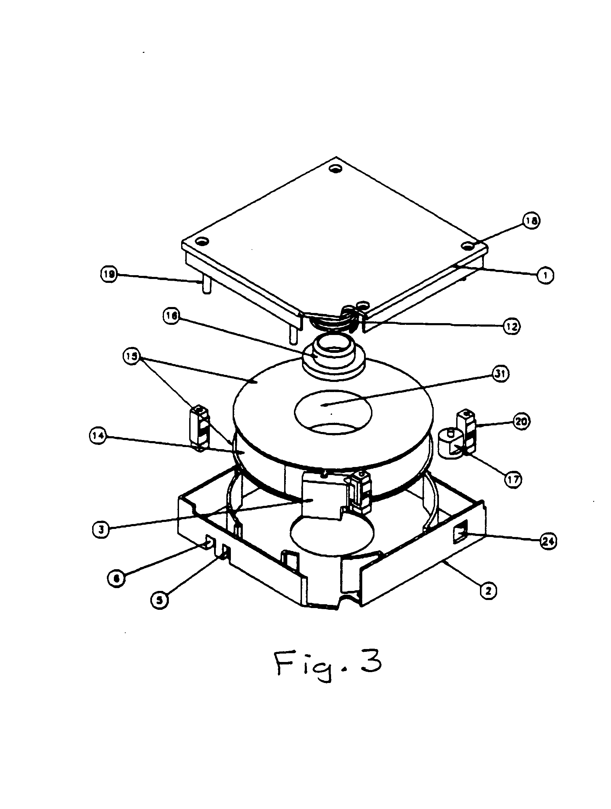

The aforementioned components are shown in an exploded view in Figure 3.

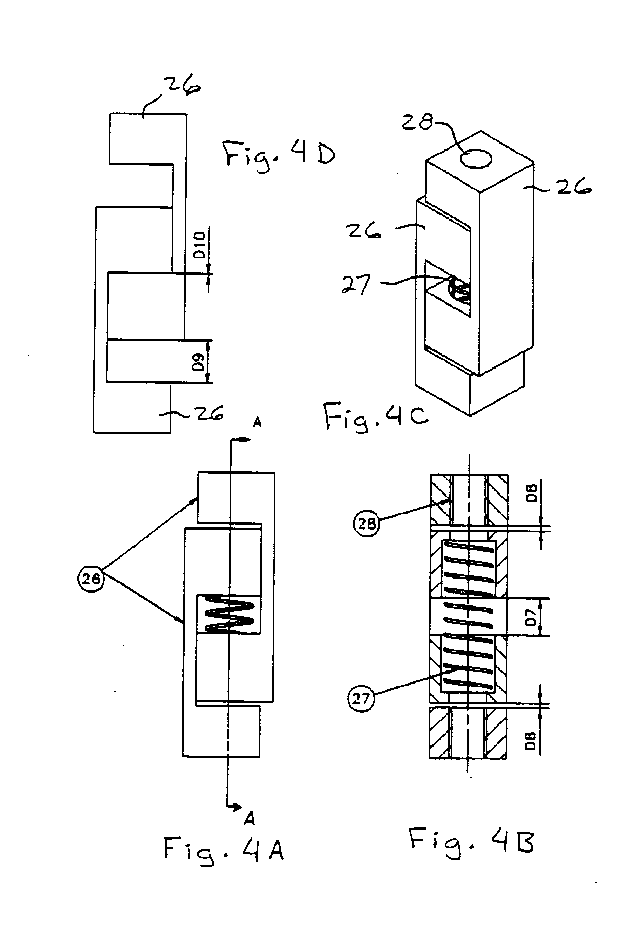

Figures 4A through 4D illustrate the operation of each of the lock spring assemblies 20. Each lock spring assembly 20 has two interlocking elements 26 with a spring 27 disposed therebetween so that the opposite ends of the springs 27 are in mechanical engagement with the respective elements 26. Each element 26 has a threaded hole 28 therein for attaching that element, by a screw, to the top cover 1 or the bottom cover 2.

When arranged as a sub-assembly outside of the cartridge, the elements 26 are forced by the spring 27 to a position where they are in contact with each other, i.e. the distance D8 indicated in Figure 4B is 0. When the respective elements 26 are attached to the top cover 1 and the bottom cover 2 by screws proceeding through the screw holes 28, the spring 27 will be compressed and the distance between the elements 26 will be D7. The top cover 1 and the bottom cover 2 then will be spring loaded toward each other by a force that is four times the force of the spring 27 (since there are four assembly 20) minus the force of the hub lock spring 12. When the cartridge is fully expanded, each spring lock assembly 20 will appear as shown in Figure 4D, with the distance D10 being a minimum (close to 0) and the clearance distance D9 being at a maximum.

Other types of locking assemblies can be employed such as a tension spring, a leaf spring or torsion springs. Magnetic coupling or snap action also can be employed in the locking assembly.

Figure 4C shows the assembly 20 in a perspective view.

The drive in which the inventive cartridge is intended to be used has two guide ribs for guiding the cartridge along the guide edges 4 shown in Figure 1A as the cartridge is being loaded into the drive. These guide ribs in the drive are movable in a direction perpendicular to the flanges 15. The drive also has four static pins which are located in registration with the lift posts 19 on the top cover 1.

When the cartridge is fully loaded into the drive, i.e., the center axis of the tape reel coincides with the center axis of the drive motor shaft, the guide ribs in the drive are moved downwardly, so that the lift pins 19 hit the static pins, and the top cover 1 stops its movement. The bottom cover 2 moves further downwardly until the toothed rim 8 on the tape reel engages a correspondingly toothed rim on the motor shaft. During this sequence, the protrusion 10 on the hub lock part 16 will hit the motor hub and the toothed rim 11 is lifted out of engagement. The tape reel is then lifted away from the bottom cover 2. The vertical movement of the guide ribs stops when the distance D7 is reached. The four lock spring assemblies 20 are now in a position close to the "cartridge expanded" position shown in Figure 4D. There is now sufficient clearance for rotation of the tape reel within the cartridge housing. The drive motor in the cartridge drive has a motor hub magnet which, in a known manner, exert magnetic forces to pull the steel plate 9 in contact to secure the drive engagement.

The top cover 1 alternatively can be lifted without making use of the lift posts 19. In this alternative embodiment, static ribs in the drive are located adjacent to the movable guide ribs. As the cartridge is located into the drive these pairs of ribs fit into the groove between the guiding edges 4 and the edge of the top cover 1. When the cartridge is loaded and the vertical movement of the cartridge starts, the top cover 1 will hook onto the static ribs and the top cover 1 will remain in the same position as the bottom cover 2 begins its vertical movement. Otherwise the sequence is the same as described above.

For unloading, the aforementioned sequence is reversed. When the cartridge is ready to be removed from the drive, the tape is tensioned and rotation of the tape reel is locked, and the cartridge is closed by the four lock spring assemblies 20.

Although modifications and changes may be suggested by those skilled in the art, it is the intention of the inventors to embody within the patent warranted hereon all changes and modifications as reasonably and properly come within the scope of their contribution to the art.

The features disclosed in the foregoing description, in the claims and/or in the accompanying drawings may, both separately and in any combination thereof, be material for realising the invention in diverse forms thereof.

## Claims

1. An expandable tape cartridge comprising:
an expandable housing having a relatively movable top and bottom with a spacing between said top and bottom which varies between a minimum spacing and a maximum spacing dependent on said relative movement;
a tape reel with magnetic recording tape wound thereon rotatably mounted in said housing for rotation around an axis proceeding substantially perpendicularly between said top and said bottom, said tape reel having a height parallel to said axis; and
said tape reel insufficient clearance in said housing, due to said height, to freely rotate when said spacing is said minimum spacing and being freely rotatable when said spacing is said maximum spacing.

2. An expandable tape cartridge as claimed in claim 1 wherein said top cover has an interior surface with a recess therein disposed to receive a portion of said tape reel therein when said spacing is said minimum spacing.

3. An expandable cartridge as claimed in claim 2 wherein said flange in said recess is sufficiently close to said top cover to reinforce said top cover with respect to forces acting on said top cover from an exterior of said expandable housing.

4. An expandable cartridge as claimed in claim 1 wherein said expandable housing has a form factor of approximately 4"×4"×1", and wherein said magnetic recording tape has a tape width, and wherein said magnetic recording tape has a tape width, parallel to said height, of approximately ¾".

5. An expandable cartridge as claimed in claim 1 wherein said expandable housing has a form factor of approximately 102.00 mm × 105.40 mm × 21.50 mm, and wherein said magnetic recording tape has a tape width, and wherein said magnetic recording tape has a tape width, parallel to said height, of approximately 19 mm.

6. An expandable cartridge as claimed in claim 1 wherein said expandable housing has a form factor of approximately 105.79 mm × 105.41 mm × 25.40 mm, and wherein said magnetic recording tape has a tape width, and wherein said magnetic recording tape has a tape width, parallel to said height, of approximately 19 mm.

7. An expandable cartridge as claimed in claim 1 wherein said expandable housing has a form factor of approximately 125.00 mm × 109.00 mm × 24.50 mm, and wherein said magnetic recording tape has a tape width, and wherein said magnetic recording tape has a tape width, parallel to said height, of approximately 19 mm.

8. An expandable cartridge as claimed in claim 1 further comprising a plurality of locking assemblies which urge said top cover and said bottom cover toward each other to maintain said minimum spacing.

9. An expandable cartridge as claimed in claim 8 wherein each of said locking assembly comprises:
a first locking element attached to said top;
a second locking element attached to said bottom, said first and second locking elements being displaceable relative to each other dependent on said relative movement; and
a spring disposed between said first and second elements and urging said first and second elements toward each other.

10. A tape cartridge comprising:
a cartridge housing having housing walls including a top and a bottom and sidewalls disposed between said top and said bottom having an interior sidewall height;
a tape reel rotatably mounted in said housing for rotation around an axis substantially parallel to said interior sidewall height, said reel having flanges respectively proceeding parallel to said top and said bottom with said flanges being respectively disposed adjacent said top and said bottom;
said top having an interior surface with a recess therein in which the flange adjacent thereto is received, said reel having a reel height defined by respective thickness of said flanges and a spacing between said flanges, which is greater than said interior sidewall height.

11. A tape cartridge as claimed in claim 10 further comprising a magnetic recording tape wound on said reel, said magnetic recording tape having a tape width of ¾" parallel to said reel height.

12. A tape cartridge as claimed in claim 10 wherein said top and said bottom are relatively movable with respect to each other.

13. A tape cartridge as claimed in claim 12 wherein said top and said bottom have respective projections proceeding parallel to said interior sidewall height, said projections overlapping each other and forming said sidewalls of said housing.

14. A tape cartridge as claimed in claim 12 further comprising a plurality of locking assemblies urging said top and said bottom toward each other.

15. A tape cartridge as claimed in claim 14 wherein said locking assemblies are spring locking assemblies.

16. A tape cartridge comprising:
a cartridge housing having an approximate 4"× 4"×1" form factor; and
a tape reel having magnetic recording tape wound thereon, said tape reel being mounted for rotation in said housing around a rotational axis; and
said magnetic recording tape having a tape width of approximately ¾" parallel to said rotational axis.

17. A tape cartridge comprising:
a cartridge housing having an approximate 102.00 mm × 105.40 mm × 21.50 mm form factor; and
a tape reel having magnetic recording tape wound thereon, said tape reel being mounted for rotation in said housing around a rotational axis; and
said magnetic recording tape having a tape width of approximately 19 mm parallel to said rotational axis.

18. A tape cartridge comprising:
a cartridge housing having an approximate 105.79 mm × 105.41 mm × 25.40 mm form factor; and
a tape reel having magnetic recording tape wound thereon, said tape reel being mounted for rotation in said housing around a rotational axis; and
said magnetic recording tape having a tape width of approximately 19 mm parallel to said rotational axis.

19. A tape cartridge comprising:
a cartridge housing having an approximate 125.00 mm × 109.00 mm × 24.50 mm form factor; and
a tape reel having magnetic recording tape wound thereon, said tape reel being mounted for rotation in said housing around a rotational axis; and
said magnetic recording tape having a tape width of approximately 19 mm parallel to said rotational axis.
